# EUROPÄISCHE PATENTSCHRIFT

(11) **EP 3 080 854 B1**
(45) Veröffentlichungstag und Bekanntmachung des Hinweises auf die Patenterteilung: **18.07.2018**
(21) Anmeldenummer: 14796422.5
(22) Anmeldetag: 05.11.2014
(51) Int. Cl.: H01M 2/20, H01M 2/30, H01M 10/42, H01M 2/10

(54) **VERFAHREN ZUR WARTUNG, REPARATUR UND/ODER OPTIMIERUNG EINER BATTERIE UND BATTERIE MIT EINER ANZAHL VON ELEKTRISCH MITEINANDER VERSCHALTETEN EINZELZELLEN**
METHOD FOR MAINTENANCE, REPAIR, AND/OR OPTIMISATION OF A BATTERY, AND BATTERY HAVING A NUMBER OF INDIVIDUAL CELLS CONNECTED ELECTRICALLY TO EACH OTHER
PROCÉDÉ POUR ENTRETENIR, RÉPARER ET/OU OPTIMISER UNE BATTERIE ET BATTERIE DOTÉE D'UN CERTAIN NOMBRE D'ÉLÉMENTS INDIVIDUELS INTERCONNECTÉS ÉLECTRIQUEMENT

(30) Priorität: 12.12.2013 DE 102013020942
(43) Veröffentlichungstag der Anmeldung: 19.10.2016
(73) Patentinhaber: Daimler AG, 70327 Stuttgart (DE)
(72) Erfinder: MEINTSCHEL, Jens, 02994 Bernsdorf (DE); SCHRÖTER,Dirk, 71364 Winnenden (DE); WELKE, Knut, 73235 Weilheim an der Teck (DE)
(74) Vertreter: JENSEN & SON
(86) Internationale Anmeldenummer: PCT/EP2014/002964
(87) Internationale Veröffentlichungsnummer: WO 2015/086102

(56) Entgegenhaltungen:
- DE-A1-102011 120 470
- JP-A- 2011 249 243
- JP-A- 2013 051 175

## Beschreibung

Die Erfindung betrifft ein Verfahren zur Wartung, Reparatur und/oder Optimierung einer Batterie, welche als Komponenten eine Anzahl von seriell und/oder parallel miteinander verschalteten Einzelzellen mit elektrischen Polkontakten, welche zur elektrischen Verschaltung direkt oder mittels Zellverbindern unter Bildung eines Überlappungsbereichs form- und/oder stoffschlüssig miteinander verbunden sind, und eine Batterieüberwachungseinheit mit einer Anzahl von Anschlusselementen, welche mit den elektrischen Polkontakten und/oder mit den Zellverbindern form- und/oder stoffschlüssig unter Bildung eines weiteren Überlappungsbereichs verbunden ist, aufweist. Weiterhin betrifft die Erfindung eine Batterie mit einer Anzahl von elektrisch miteinander verschalteten Einzelzellen.

Aus dem Stand der Technik sind allgemein elektrochemische Hochvolt-Batterien für Fahrzeuganwendungen bekannt, welche aus mehreren elektrisch seriell und/oder in parallel verschalteten Einzelzellen gebildet sind. Zum elektrischen Reihenschalten der Einzelzellen sind deren elektrischen Pole direkt über einen elektrisch leitfähigen Zellverbinder verbunden. Darüber hinaus sind die elektrischen Pole der jeweiligen Einzelzelle und/oder die Zellverbinder mit einer Vorrichtung zur Zellspannungsmessung und zum Ladungsausgleich, dem so genannten Balancing, elektrisch verbunden. Die Vorrichtung zur Zellspannungsmessung und zum Ladungsausgleich ist in der Regel für mehrere Einzelzellen in einer Batterieelektronik zusammengefasst. Dabei erfolgt eine Kontaktierung der elektrischen Pole der Einzelzellen mit den Zellverbindern und der elektrischen Pole und/oder der Zellverbinder mit der Vorrichtung zur Zellspannungsmessung und zum Ladungsausgleich mittels stoffschlüssiger Verfahren, wie z. B. Laserschweißung, Widerstandspressschweißung, Ultraschallschweißung und/oder mittels formschlüssiger Verfahren, wie beispielsweise Toxen/Clinchen, Crimpen. Diese hergestellten stoff- und/oder formschlüssigen Verbindungen sichern die jeweilige Funktion über die Batterielebensdauer auch bei hoher mechanischer, korrosiver und/oder thermischer Belastung, wobei die jeweilige Verbindung nicht zerstörungsfrei lösbar ist.

In der DE 10 2011 120 470 A1 ist eine Batterie beschrieben, umfassend eine Anzahl von seriell und/oder parallel miteinander verschalteten Einzelzellen, wobei deren elektrische Pole zur elektrischen Verschaltung direkt oder mittels Zellverbindern form- und/oder stoffschlüssig miteinander verbunden sind, und eine Batterieüberwachungseinheit, welche mit den elektrischen Polen und/oder mit den Zellverbindern form- und/oder stoffschlüssig verbunden ist. Dabei weisen die elektrischen Pole der Einzelzellen, die Zellverbinder zur elektrischen Verschaltung benachbarter Einzelzellen und/oder die Batterieüberwachungseinheit jeweils redundante Kontaktierbereiche zur form- und/oder stoffschlüssigen Verbindung auf, wobei jeweils nur einer der zueinander redundanten Kontaktierbereiche form- und/oder stoffschlüssig verbunden ist, wobei der oder die weiteren Kontaktierbereiche nicht verbunden ist bzw. sind. Darüber hinaus wird ein Verfahren zur Wartung, Reparatur und/oder Optimierung einer solchen Batterie beschrieben.
Eine weitere Batterie ist in der DE 10 2009 035 477 A1 beschrieben, die eine Mehrzahl von Einzelzellen umfasst, die über Zellverbinder in Reihe und/oder parallel elektrisch miteinander verschaltet sind, wobei mindestens ein Zellverbinder zur Verschaltung der Einzelzellen ein integriertes elektrisches Sicherungselement aufweist.
Die US 2012/0028098 A1 offenbart ein Verfahren zur Reparatur einer Batterie mit zwei stirnseitig angeordneten Rahmen, die jeweils eine Oberseite, eine Unterseite sowie zwei gegenüberliegend angeordnete Seiten aufweisen. Die stirnseitigen Rahmen weisen an zumindest einer der Seiten ein Rastelement zur Aufnahme einer Klemme auf. Ein zwischen den stirnseitigen Rahmen angeordneter Rahmen weist ebenfalls eine Oberseite, eine Unterseite sowie zwei gegenüberliegend angeordnete Seiten auf, wobei zumindest eine der Seiten eine Kante aufweist. Die in der Batterie angeordneten Einzelzellen sind dabei in dem Rahmen und den stirnseitigen Rahmen angeordnet und über die Oberseiten der Rahmen elektrisch zueinander kontaktiert. Weiterhin ist zumindest ein Kühlmittel zwischen den Einzelzellen angeordnet. Bei dem Verfahren wird eine Klemme in das Rastelement eingeführt, um eine Kompression der Batterie zu ermöglichen. Anschließend wird die Batterie mittels der in dem Rastmittel angeordneten Klemme zu einer Werkstatt transportiert, wobei mittels der Kante die Batterie während des Transports gestützt ist. Um einen Zugang zu einer Unterseite der Batterie zu erhalten, wird die Klemme entfernt. Im Anschluss daran sind die Batteriezellen, die Kühlmittel und/oder die Rahmen reparierbar, wobei eine elektrische Verbindung weiterhin sichergestellt ist.

Weiterhin sind in der KR 10-2012-0081402 A, der CN 201893387 U, der DE 10 2009 054 269 A1 und der JP 2012069332 A Batterien sowie Verfahren zur Reparatur und/oder Austausch solcher Batterien beschrieben.

JP 2011 249243 A1 und DE 10 2011 120470 A1 offenbaren jeweils eine Batterie mit miteinander verschalteten Einzelzellen, deren Polkontakte über ein Verbindungselement stoffschlüssig miteinander verbunden sind.

Der Erfindung liegt die Aufgabe zugrunde, ein gegenüber dem Stand der Technik verbessertes Verfahren zur Wartung, Reparatur und/oder Optimierung einer Batterie sowie eine verbesserte Batterie mit einer Anzahl von elektrisch miteinander verschalteten Einzelzellen anzugeben.

Erfindungsgemäß wird die Aufgabe hinsichtlich des Verfahrens durch die in Anspruch 1 und hinsichtlich der Batterie durch die in Anspruch 10 angegebenen Merkmale gelöst.

Vorteilhafte Ausgestaltungen der Erfindung sind Gegenstand der Unteransprüche.

Bei einem Verfahren zur Wartung, Reparatur und/oder Optimierung einer Batterie, welche als Komponenten eine Anzahl von seriell und/oder parallel miteinander verschalteten Einzelzellen mit elektrischen Polen, welche zur elektrischen Verschaltung direkt oder mittels Zellverbindern unter Bildung eines Überlappungsbereichs form- und/oder stoffschlüssig miteinander verbunden sind, und/oder eine Batterieüberwachungseinheit mit einer Anzahl von Anschlusselementen, welche mit den elektrischen Polen und/oder mit den Zellverbindern form- und/oder stoffschlüssig unter Bildung eines weiteren Überlappungsbereichs verbunden sind, aufweist, ist erfindungsgemäß vorgesehen, dass zum Austausch einer Komponente die form- und/oder stoffschlüssige Verbindung der auszutauschenden Komponente mit mindestens einer nicht auszutauschenden Komponente unmittelbar neben dem Überlappungsbereich getrennt wird und eine Ersatzkomponente mittels deren elektrischer Pole oder Anschlusselementen mit den Überlappungsbereichen der mindestens einen nicht auszutauschenden Komponente unter Bildung eines jeweils neuen Überlappungsbereichs form- und/oder stoffschlüssig verbunden wird.

Mittels des Verfahrens ist es möglich, Komponenten der Batterie für eine Reparatur, eine Wartung und/oder einen Austausch zu entnehmen, wobei die elektrischen Pole oder die Anschlusselemente der auszutauschenden Komponente durchtrennt werden und der Komponente verbleibt, so dass diese mit einem abgetrennten Abschnitt des Pols oder des Anschlusselements der auszutauschenden Komponente weiterhin stoffschlüssig verbunden ist. Damit kann die auszutauschende Komponente in einfacher Art und Weise aus der Batterie demontiert werden, wobei ein Risiko für eine Beschädigung der mindestens einen nicht auszutauschenden Komponente minimiert wird. Zur Montage der Ersatzkomponente wird diese mit ihren Polen oder Anschlusselementen mit der bereits vorhandenen Fügeverbindung der mindestens einen nicht auszutauschenden Komponente stoff- und formschlüssig verbunden. Dadurch können in Gewinn bringender Weise Kosten und Zeit bei der Wartung, Reparatur und/oder Optimierung der Batterie verringert werden.

Zur Demontage der auszutauschenden Komponente wird die form- und/oder stoffschlüssige Verbindung der auszutauschenden Komponente mit der mindestens einen nicht auszutauschenden Komponente mittels Blechschneiden, Abschleifen, Abfräsen, Sägen, Laserschneiden, Wasserstrahlschneiden und/oder Mikro-Brennschneiden, getrennt. Damit kann die form- und/oder stoffschlüssige Verbindung wahlweise mittels allgemein bekannter mechanischer Verfahren mit einem Werkzeugkontakt oder mittels berührungslosen Verfahren durchtrennt werden.

Für den Fall, dass die Ersatzkomponente eine Einzelzelle ist, so werden deren elektrische Polkontakte derart abgewinkelt, dass diese jeweils unterhalb oder oberhalb des Überlappungsbereiches der mindestens einen nicht auszutauschenden Einzelzelle anordenbar sind. Damit weisen die Polkontakte im zusammengesetzten Zustand eine zu den Polkontakten oder Anschlusselementen der demontieren Einzelzelle versetzte Position auf, die es ermöglicht, diese auf oder unter den Überlappungsbereichen der mindestens einen nicht auszutauschenden Einzelzelle anzuordnen. Damit ist es möglich, die Einzelzelle über die bereits vorhandenen Fügestellen mit der mindestens einen nicht auszutauschenden Einzelzelle stoff- und formschlüssig zu verbinden.

Wenn die Ersatzkomponente alternativ die Batterieüberwachungseinheit ist, so werden deren Anschlusselemente derart abgewinkelt, dass diese oberhalb des Überlappungsbereiches der in der Batterie jeweils angeordneten Einzelzellen anordenbar sind. Damit weisen die Anschlusselemente im zusammengesetzten Zustand eine zu den Anschlusselementen der demontieren Batterieüberwachungseinheit versetzte Position auf, die es ermöglicht, diese auf den Überlappungsbereichen der in der Batterie angeordneten Einzelzellen anzuordnen. Damit ist es möglich, die Batterieüberwachungseinheit über die bereits vorhandenen Fügestellen mit den Einzelzellen stoff- und formschlüssig zu verbinden.

Ist die Ersatzkomponente eine Einzelzelle und dabei insbesondere als eine bipolare Rahmenflachzelle ausgebildet, wird die form- und/oder stoffschlüssige Verbindung der Einzelzelle mit der mindestens einen nicht auszutauschenden Einzelzelle mittels Ultraschallschweißen hergestellt. Dazu wird ein Ultraschweißwerkzeug, bestehend aus einem Amboss und einer hochfrequenten Sonotrode, verwendet, zwischen welchen der neue Überlappungsbereich angeordnet wird, wobei mittels der Sonotrode ein mechanisch stabiler Stoff- und Formschluss zwischen den Einzelzellen herstellbar ist.

Ist die Ersatzkomponente eine als Pouchzelle ausgebildete Einzelzelle oder die Batterieüberwachungseinheit, wird die form- und/oder stoffschlüssige Verbindung der Pouchzelle mit der mindestens einen nicht auszutauschenden Pouchzelle oder die form- und/oder stoffschlüssige Verbindung der Batterieüberwachungseinheit mit den Einzelzellen der Batterie durch Kaltlöten hergestellt. Dies ermöglicht gegenüber der Ultraschweißung einen verringerten Aufwand, da die Anordnung des Ultraschweißwerkzeugs, insbesondere des Ambosses und der Sonotrode, bei als Pouchzellen ausgebildeten Einzelzellen oder der Batterieüberwachungseinheit, aufgrund der vergleichsweise kleinen Überlappungsbereiche problematisch ist. Zum Kaltlöten werden dabei Lötbleche auf den neuen Überlappungsbereichen angeordnet, welche ein exotherm reaktives Material aufweisen. Die Reaktion des Materials kann dabei mittels eines kurzen Stromimpulses hervorgerufen werden, so dass es beispielsweise möglich ist, die Batterie mit einem Widerstand zu koppeln und so die elektrische Energie der Batterie zur Kaltlötung zu verwenden.

Eine Batterie weist als Komponenten eine Anzahl von seriell und/oder parallel miteinander verschalteten Einzelzellen mit elektrischen Polkontakten, welche zur elektrischen Verschaltung direkt oder mittels Zellverbindern unter Bildung eines Überlappungsbereichs form- und/oder stoffschlüssig miteinander verbunden sind, und eine Batterieüberwachungseinheit mit einer Anzahl von Anschlusselementen, welche mit den elektrischen Polkontakten und/oder mit den Zellverbindern form- und/oder stoffschlüssig unter Bildung eines weiteren Überlappungsbereichs verbunden sind, auf. Erfindungsgemäß weist eine Ersatzkomponente derart abgewinkelte Polkontakte oder Anschlusselemente auf, dass diese jeweils oberhalb und/oder unterhalb des Überlappungsbereichs mit einer mit der Ersatzkomponente verbundenen Komponente angeordnet ist, wobei ein neuer Überlappungsbereich gebildet ist.

Ausführungsbeispiele der Erfindung werden im Folgenden anhand von Zeichnungen näher erläutert.

Dabei zeigen:
- Fig. 1: schematisch in perspektivischer Ansicht eine als bipolare Rahmenflachzelle ausgebildete Einzelzelle,
- Fig. 2: schematisch in perspektivischer Ansicht einen aus bipolaren Rahmenflachzellen gebildeten Zellblock in einer Explosionsdarstellung,
- Fig. 3: schematisch in perspektivischer Ansicht den Zellblock im zusammengesetzten Zustand,
- Fig. 4: schematisch den Zellblock gemäß Figur 3 in Seitenansicht,
- Fig. 5: schematisch in perspektivischer Ansicht den Zellblock gemäß Figur 3 mit einer auszutauschenden Einzelzelle,
- Fig. 6: schematisch in perspektivischer Ansicht den Zellblock nach Heraustrennen der auszutauschenden Einzelzelle,
- Fig. 7: schematisch in perspektivischer Ansicht einen vergrößerten Ausschnitt eines oberen, durch Heraustrennen der auszutauschenden Einzelzelle gebildeten Freiraums,
- Fig. 8: schematisch eine Seitenansicht des Zellblocks gemäß Figur 6,
- Fig. 9: schematisch in perspektivischer Ansicht eine in den Freiraum des Zellblocks neu einzusetzenden Einzelzelle,
- Fig. 10: schematisch in perspektivischer Ansicht den Zellblock beim Einsetzen der neuen Einzelzelle in teilweiser Explosionsdarstellung,
- Fig. 11: schematisch eine Seitenansicht des Zellblocks beim Einsetzen der neuen Einzelzelle in teilweiser Explosionsdarstellung,
- Fig. 12: schematisch in perspektivischer Ansicht den Zellblock beim Verbinden der in den Zellblock eingesetzten Einzelzelle mit den benachbarten Einzelzellen mittels eines Schweißwerkzeuges,
- Fig. 13: schematisch in perspektivischer Ansicht den Zellblock nach dem Verbinden der in den Zellblock eingesetzten Einzelzelle,
- Fig. 14: schematisch einen vergrößerten Ausschnitt mit zwei Überlappungsbereichen der neu eingesetzten Einzelzelle und jeweils einer benachbarten Einzelzelle,
- Fig. 15: schematisch eine Seitenansicht des Zellblocks gemäß Figur 13,
- Fig. 16: schematisch in perspektivischer Ansicht als Pouchzellen ausgebildete Einzelzellen,
- Fig. 17: schematisch in perspektivischer Ansicht einen Ausschnitt aus einem zusammengesetzten Zellblock mit vier Einzelzellen gemäß Figur 16,
- Fig. 18: schematisch einen vergrößerten Ausschnitt zweier im Zellblock benachbart angeordneter Einzelzellen mit verschweißten Polkontakten in einer Schnittdarstellung,
- Fig. 19: schematisch in perspektivischer Ansicht den Ausschnitt gemäß Figur 17 nach dem Durchtrennen zweier Polkontakte einer auszutauschenden Einzelzelle,
- Fig. 20: schematisch einen vergrößerten Ausschnitt aus Figur 19,
- Fig. 21: schematisch in perspektivischer Ansicht den Ausschnitt des Zellblocks gemäß Figur 18 mit einer auszutauschenden Einzelzelle mit durchtrennten Polkontakten in teilweiser Explosionsdarstellung,
- Fig. 22: schematisch in perspektivischer Ansicht den Ausschnitt des Zellblocks gemäß Figur 21 beim Einsetzen einer neuen Einzelzelle,
- Fig. 23: schematisch in perspektivischer Ansicht den Ausschnitt des Zellblocks nach dem Einsetzen und Verbinden der neuen Einzelzelle,
- Fig. 24: schematisch in perspektivischer Ansicht einen vergrößerten Ausschnitt der neu eingesetzten Einzelzelle mit einem neuen Überlappungsbereich,
- Fig. 25: schematisch einen vergrößerten Ausschnitt mit der neu eingesetzten Einzelzelle und einer benachbarten Einzelzelle und einem neuen Überlappungsbereich,
- Fig. 26: schematisch in perspektivischer Ansicht einen Zellblock mit Einzelzellen gemäß Figur 16 und eine Batterieüberwachungseinheit in teilweiser Explosionsdarstellung,
- Fig. 27: schematisch in perspektivischer Ansicht den Zellblock im zusammengesetzten Zustand mit befestigter Batterieüberwachungseinheit,
- Fig. 28: schematisch in perspektivischer Ansicht einen vergrößerten Ausschnitt einer an dem Zellblock befestigten, auszutauschenden Batterieüberwachungseinheit,
- Fig. 29: schematisch in perspektivischer Ansicht den vergrößerten Ausschnitt gemäß Figur 28 nach dem Heraustrennen der auszutauschenden Batterieüberwachungseinheit und
- Fig. 30: schematisch in perspektivischer Ansicht den vergrößerten Ausschnitt gemäß Figur 29 mit einer neu eingesetzten Batterieüberwachungseinheit.

Einander entsprechende Teile sind in allen Figuren mit den gleichen Bezugszeichen versehen.

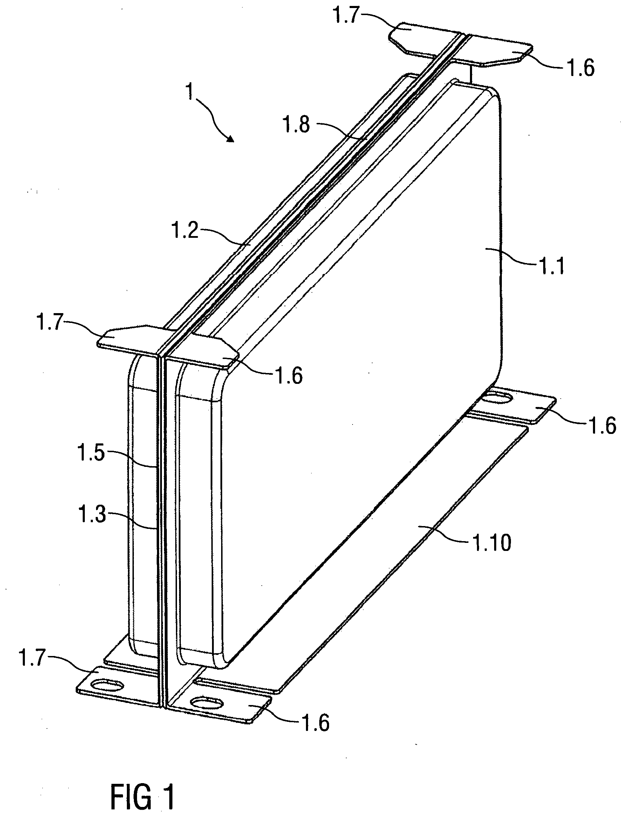

In den Figuren 1 bis 15 ist eine erste Ausführungsform der Erfindung näher dargestellt und beschrieben.

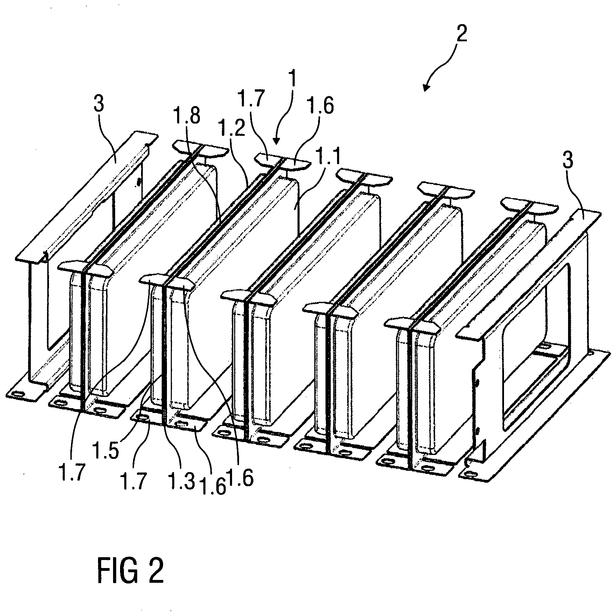

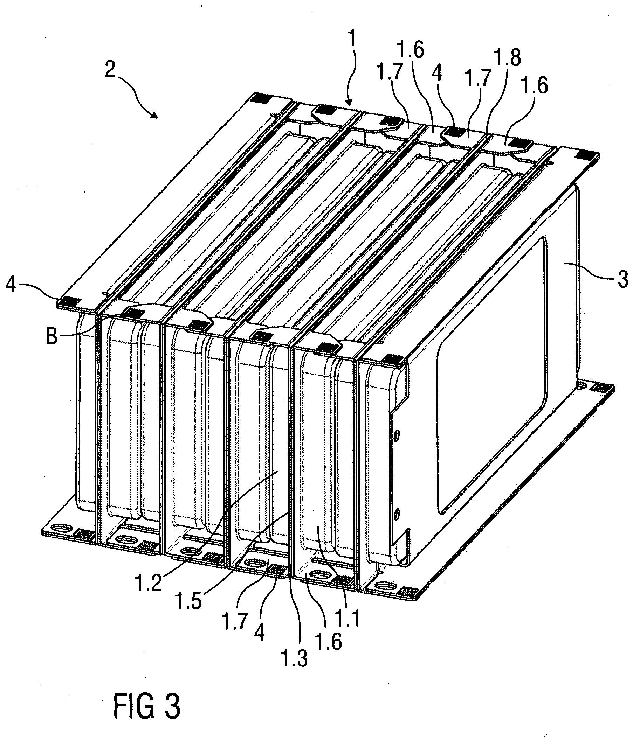

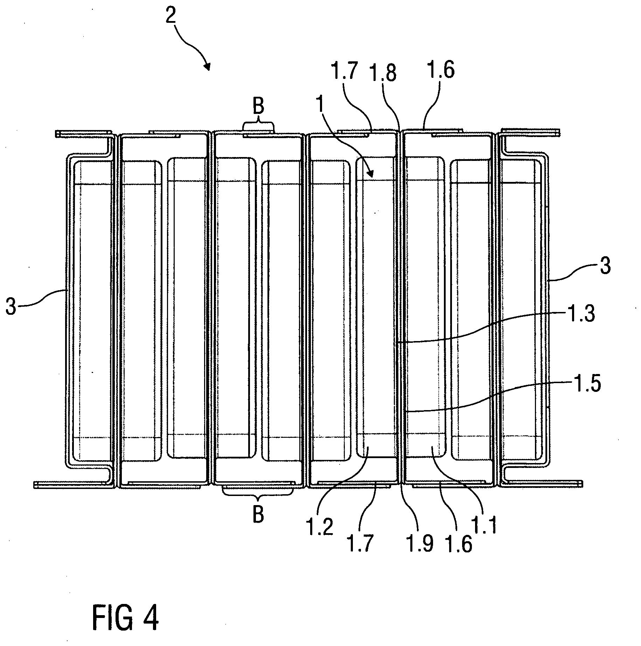

Die Figur 1 zeigt in einer perspektivischen Ansicht eine als bipolare Rahmenflachzelle ausgebildete Einzelzelle 1, welche Bestandteil eines Zellblocks 2 ist, der u. a. in den Figuren 2 bis 4 näher dargestellt ist. Dazu zeigt die Figur 2 den Zellblock 2 mit unverschweißten Einzelzellen 1 in einer Explosionsdarstellung. In der Figur 3 ist der Zellblock 2 im zusammengesetzten Zustand mit verschweißten Einzelzellen 1 dargestellt. Die Figur 4 zeigt den Zellblock 2 gemäß Figur 3 in einer Seitenansicht.

Der Zellblock 2 ist Bestandteil einer Batterie, welche insbesondere eine Fahrzeugbatterie für ein Elektrofahrzeug, ein Hybridfahrzeug oder ein mit Brennstoffzellen betriebenes Fahrzeug ist. Dabei ist die Batterie eine Traktionsbatterie eines solchen Fahrzeuges.

Die als bipolare Rahmenflachzelle ausgebildete Einzelzelle 1 weist ein weitestgehend metallisches Gehäuse auf, welches im vorliegenden Ausführungsbeispiel aus zwei Gehäuseschalen 1.1, 1.2 gebildet ist, die zur Bildung eines Flansches jeweils einen rechtwinklig nach außen abgewinkelten Randbereich aufweisen. Beispielsweise sind die Gehäuseschalen 1.1, 1.2 durch ein Umformverfahren, z. B. durch Prägen, Pressen, Tiefziehen oder durch Fließpressen, geformt.

In dem Gehäuse ist ein elektrochemisch aktiver Teil der Einzelzelle 1 in Form einer Elektrodenfolienanordnung 1.3 angeordnet, welche als Elektrodenstapel oder Elektrodenwickel ausgebildet ist und welche Lagen aus Kathoden- und Anodenfolien umfasst, die jeweils durch einen Separator getrennt werden. Bei Lithium-Ionen Batterien umfasst die Elektrodenfolienanordnung 1.3 beispielsweise beschichtete Aluminium- und Kupferfolien. Die Anoden- Kathoden- und Separatorfolien können dabei als einzelne Blätter gestapelt oder in Form von Bändern gewickelt oder flachgewickelt sein oder der Separator ist bandförmig ausgeformt und in Z-Form gefaltet, wobei dieser seitlich in die sich bildenden Taschen der Kathoden- und Anodenblätter eingeschoben wird.

Die Anoden- und Kathodenfolien sind an mindestens einem Rand unbeschichtet und aus der Elektrodenfolienanordnung 1.3 abschnittsweise herausgeführt, wobei jeweils die herausgeführten Abschnitte der Anodenfolien und der Kathodenfolien zu einer Stromableiterfahne miteinander verbunden werden.

Die Stromableiterfahnen werden dabei jeweils mit einer Gehäuseschale 1.1, 1.2 verbunden, so dass die Gehäuseschalen 1.1, 1.2 Spannung führen und damit jeweils einen elektrischen Pol der Einzelzelle 1 bilden. Beispielsweise ist eine erste Gehäuseschale 1.1 ein Pluspol und eine zweite Gehäuseschale 1.2 ein Minuspol der Einzelzelle 1.

Zur Anbindung der Stromableiterfahnen an die jeweilige Gehäuseschale 1.1, 1.2 kommen stoffschlüssige Verfahren, wie z. B. Press- oder Schmelzschweißverfahren, insbesondere Widerstandspunktschweißen, Ultraschallschweißen oder Laserschweißung, zum Einsatz. Alternativ ist auch eine kraftschlüssige Anbindung, z. B. durch Nietung, möglich.

Die Gehäuseschalen 1.1, 1.2 sind weiterhin durch einen zwischen diesen angeordneten, im Bereich der Flansche umlaufenden, elektrisch isolierenden Rahmen 1.4 voneinander getrennt, welcher dazu aus einem Kunststoff gefertigt ist.

Eine Verlustwärme der Einzelzelle 1 wird über die Gehäuseschalen 1.1, 1.2 an eine nicht näher dargestellte Kühlplatte abgegeben, die von einem Klimakühlmittel oder einer Kühlflüssigkeit durchströmt wird. Zur elektrischen Isolation von den Gehäuseschalen 1.1, 1.2 und der weitestgehend metallischen Kühlplatte ist dazwischen eine ebenfalls nicht näher dargestellte Wärmeleitfolie angeordnet.

Zum Verschluss der Einzelzelle 1 werden die Gehäuseschalen 1.1, 1.2 im Bereich ihrer Flansche stoffschlüssig miteinander verbunden, wobei vorzugsweise ein Heißpressverfahren eingesetzt wird, mittels welchem ein Siegelflansch 1.5 gebildet wird. Dafür ist der Rahmen 1.4 zumindest abschnittsweise, insbesondere im Bereich des Siegelflansches 1.5 aus einem thermoplastischem Material ausgeführt, welches nach dem Abkühlen eine stoffschlüssige Verbindung mit den Gehäuseschalen 1.1, 1.2 eingeht. Alternativ können die Gehäuseschalen 1.1, 1.2 auch miteinander verklebt sein.

Zur elektrischen Kontaktierung der in dem Zellblock 2 angeordneten Einzelzellen 1 sind an den Flanschen der Gehäuseschalen 1.1, 1.2 von diesen nach außen abgewinkelte, fahnenartige Teilstücke angeordnet, die mit einer Stromableiterfahne der Elektrodenfolienanordnung 1.3 elektrisch leitend und flächig verbunden sind und damit jeweils einen Polkontakt 1.6, 1.7 bilden.

Eine Einzelzelle 1 weist im vorliegenden Ausführungsbeispiel acht Polkontakte 1.6, 1.7 auf, wobei jeweils eine der Gehäuseschalen 1.1, 1.2 vier Polkontakte 1.6, 1.7 einer Polarität aufweist, die mit der Polarität der Gehäuseschale 1.1, 1.2 korrespondieren. Dabei ist an jeweils einem stirnseitigen Ende einer Oberseite 1.8 und an jeweils einem stirnseitigen Ende einer Unterseite 1.9 der Einzelzelle 1 ein solcher Polkontakt 1.6, 1.7 angeordnet.

Die Polkontakte 1.6, 1.7 sind dabei derart nach außen abgewinkelt, dass diese im zusammengesetzten Zustand des Zellblocks 2 in Richtung dessen Längsausdehnung von der Einzelzelle 1 abgewinkelt und damit einer benachbarten Einzelzelle 1 oder einem benachbarten elektrischen Anschlusselement 3 zugewandt sind. Die Polkontakte 1.6, 1.7 einer Gehäuseschale 1.1, 1.2 sind dabei gleichgerichtet abgewinkelt, wohingegen ein erster Polkontakt 1.6 einer ersten Gehäuseschale 1.1 eine zu einem zweiten Polkontakt 1.7 der zweiten Gehäuseschale 1.2 verschiedene Polarität aufweist und zu diesem zweiten Polkontakt 1.7 in eine gegenläufige Richtung abgewinkelt ist.

Die Einzelzellen 1 weisen darüber hinaus zwei weitere nach außen abgewinkelte Teilstücke 1.10 auf, wobei jeweils eines der Teilstücke auf der Unterseite 1.9 zwischen den Polkontakten 1.6, 1.7 angeordnet ist. Diese Teilstücke sind dabei äquivalent zu den Polkontakten 1.6, 1.7 in Richtung der Längsausdehnung des Zellblocks 2 abragend und dienen einer verbesserten mechanischen Fixierung der Einzelzellen 1 im Zellblock 2.

Um benachbarte Einzelzellen 1 elektrisch miteinander zu verbinden, werden die sich jeweils einander zugewandten Polkontakte 1.6, 1.7 stoffschlüssig, z. B. mittels Ultraschallschweißens, miteinander verbunden. Dazu wird ein Polkontakt 1.6, 1.7 einer Einzelzelle 1 abschnittsweise über oder unter den ihm zugewandten Polkontakt 1.6, 1.7 der benachbarten Einzelzelle 1 angeordnet, so dass ein Überlappungsbereich B gebildet wird, in welchem die beiden Pole 1.6, 1.7 durch jeweils einen Schweißpunkt 4 miteinander verschweißt werden, wie es in Figur 3 dargestellt ist.

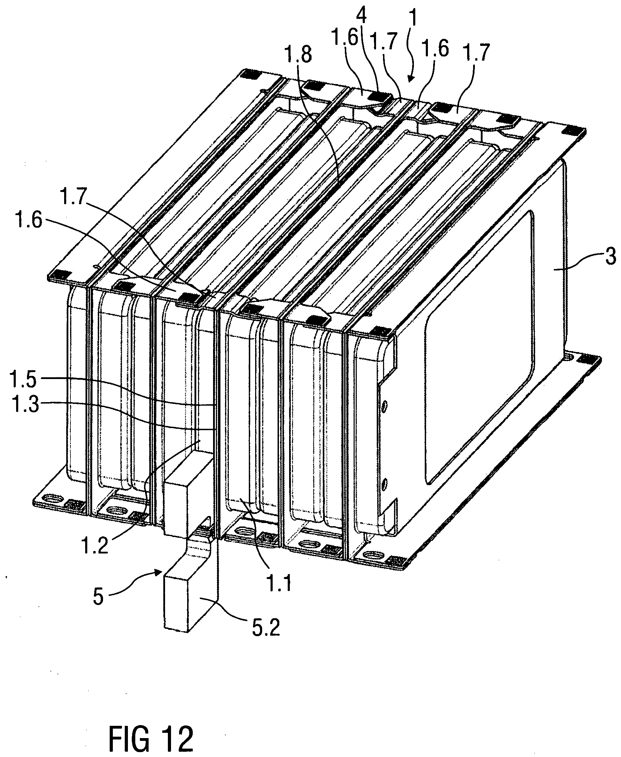

Zur Verschweißung wird ein Schweißwerkzeug 5 aus einer hochfrequent bewegbaren Sonotrode 5.1 und einem feststehenden Amboss 5.2 verwendet, welches in Figur 12 näher dargestellt ist. Der Überlappungsbereich B stellt damit einen Kontaktierbereich der Einzelzellen 1 dar.

Im vorliegenden Ausführungsbeispiel sind die Einzelzellen 1 im Zellblock 2 elektrisch in Reihe zueinander geschaltet. Alternativ können die Einzelzellen 1 auch elektrisch parallel geschaltet sein.

An den stirnseitigen Enden des Zellblocks 2 ist jeweils ein elektrisches Anschlusselement 3 angeordnet, welches einen Hochvoltkontakt zum Abgreifen von Strom und Spannung bildet und aus einem Biegeblechteil geformt ist.

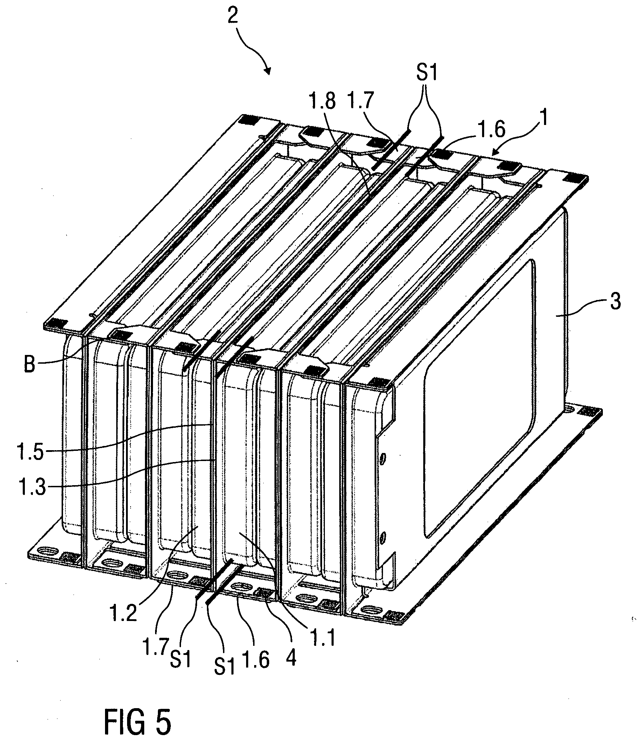

Die Figur 5 zeigt den zuvor beschriebenen Zellblock 2 in perspektivischer Ansicht mit eingezeichneten ersten Schnittlinien S1, welche jeweils eine Trennstelle zum Austausch einer in dem Zellblock 2 angeordneten defekten Einzelzelle 1 darstellen. Zur Demontage der defekten Einzelzelle 1 wird diese entlang der ersten Schnittlinien S1 aus dem Zellblock 2 herausgetrennt. Die ersten Schnittlinien S1 sind im Sinne der Erfindung an den Polkontakten 1.6, 1.7 der defekten Einzelzelle 1 unmittelbar neben dem Überlappungsbereich B angeordnet.

Das Heraustrennen der defekten Einzelzelle 1 kann mittels mechanischer Verfahren mit Werkzeugkontakt, wie z. B. Blechschneiden, Abschleifen, Abfräsen, Sägen, oder mittels berührungsloser Verfahren, wie z. B. Laserschneiden, Wasserstrahlschneiden, Mikro-Brennschneiden, erfolgen.

Zusätzlich ist es möglich, die Polkontakte 1.6, 1.7 der Einzelzellen 1 mit Sollbruchstellen, z. B. in Form einer Kerbe, zu versehen, um ein Heraustrennen der defekten Einzelzelle 1 zu erleichtern.

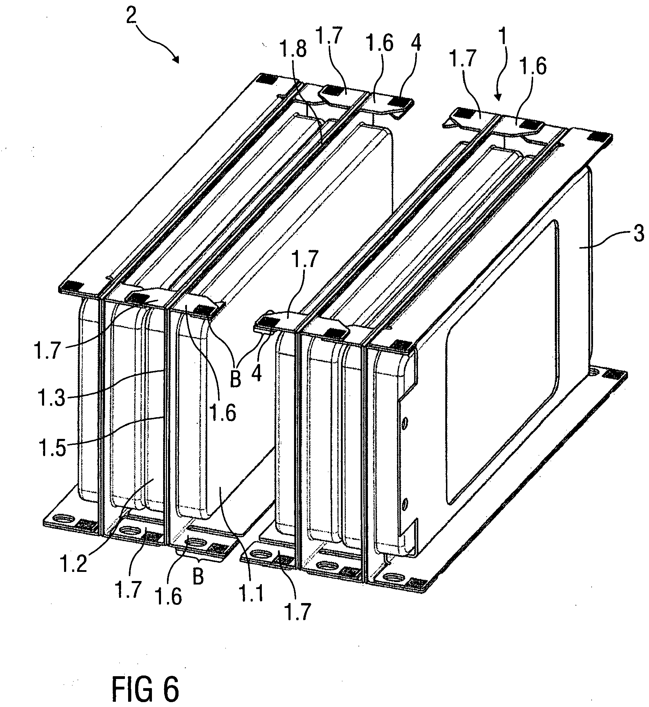

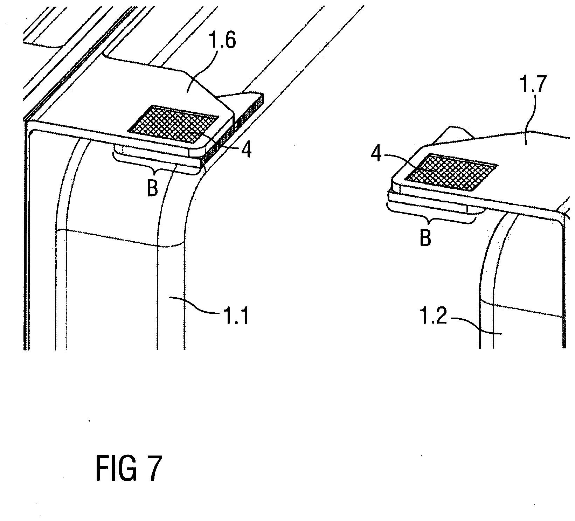

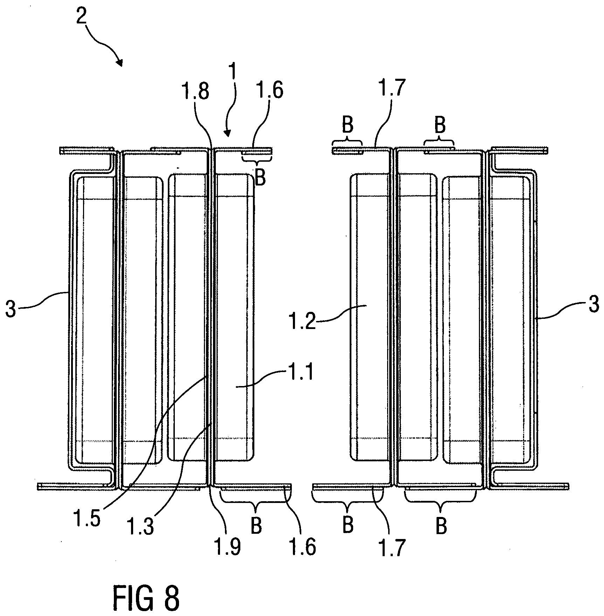

Die Figur 6 zeigt den Zellblock 2 nach dem Heraustrennen der defekten Einzelzelle 1 in perspektivischer Ansicht. In der Figur 7 ist ein vergrößerter Ausschnitt aus dem in Figur 6 gezeigten Zellblock 2 dargestellt, wobei zu erkennen ist, dass die Polkontakte 1.6, 1.7 der zu der defekten Einzelzelle 1 benachbarten Einzelzellen1 jeweils mit einem von der defekten Einzelzelle 1 abgetrennten Abschnitt der Polkontakte 1.6, 1.7 weiterhin verschweißt sind. Die Figur 8 zeigt den Zellblock 2 in einer Seitenansicht.

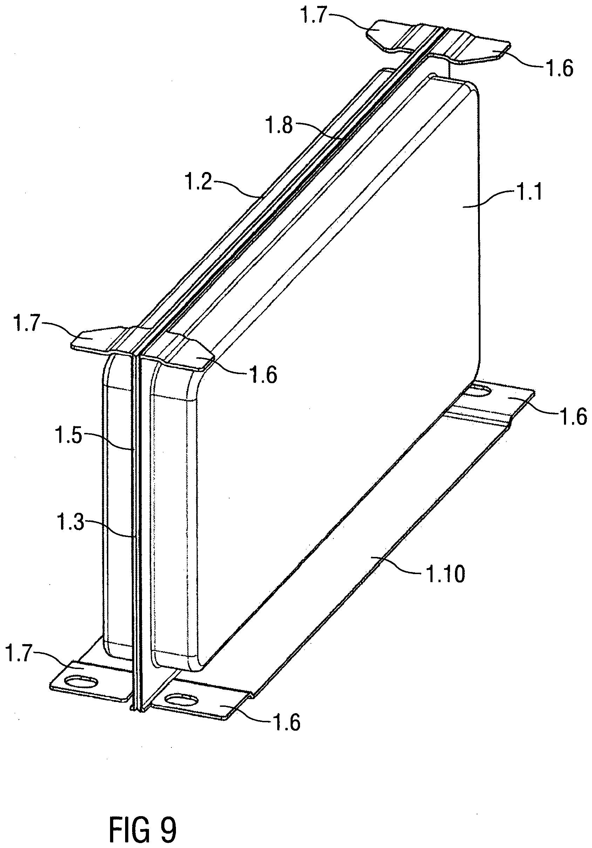

In der Figur 9 ist eine neu in den Zellblock 2 einzusetzende Einzelzelle 1 perspektivisch dargestellt, welche die defekte, bereits demontierte, Einzelzelle 1 ersetzt. Dabei kann die neue Einzelzelle 1 auch als reparierte Einzelzelle 1 verstanden werden.

Die Polkontakte 1.6, 1.7 der neuen Einzelzelle 1 sind gegenüber den Polkontakten 1.6, 1.7 der defekten Einzelzelle 1 sowie der in dem Zellblock 2 weiteren angeordneten, intakten Einzelzellen 1 verschieden ausgebildet.

Die auf der Oberseite 1.8 der neuen Einzelzelle 1 angeordneten Polkontakte 1.6, 1.7 sind mit ihrem freien Ende gegenüber einem an dem Flansch der Gehäuseschale 1.1, 1.2 angeordneten Ende in Bezug auf eine Hochausrichtung annähernd stufenförmig nach unten abgewinkelt.

Die auf der Unterseite 1.9 der neuen Einzelzelle 1 angeordneten Polkontakte 1.6, 1.7 sind mit dem weiteren Teilstück 1.10 einteilig ausgebildet und sind mit ihrem freien Ende dem weiteren Teilstück 1.10 gegenüber in Bezug auf eine Hochausrichtung annähernd stufenförmig nach oben abgewinkelt.

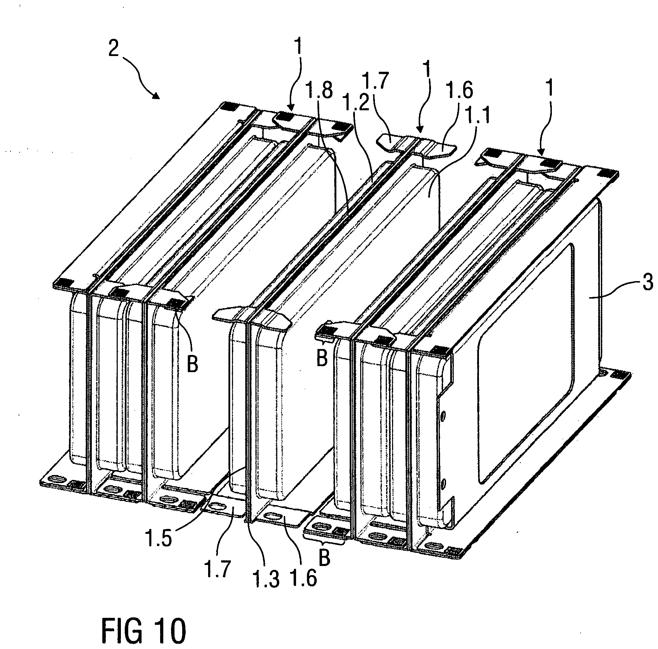

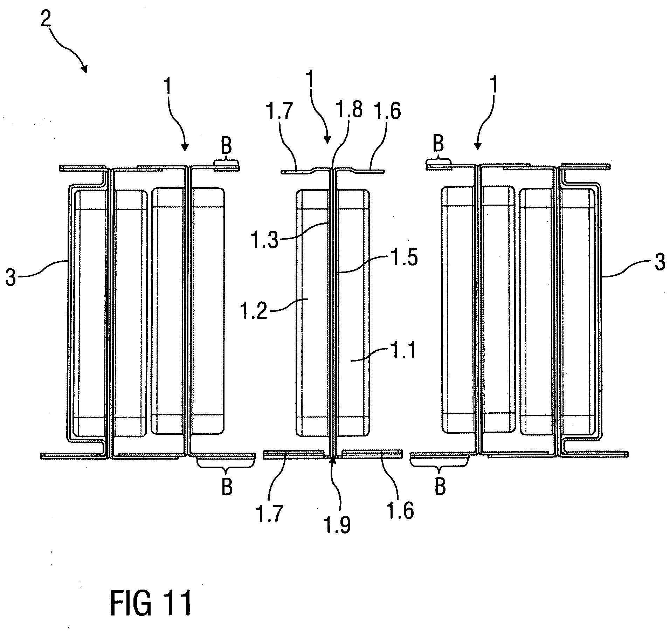

Die Anordnung der neuen Einzelzelle 1 in dem Zellblock 2 ist in der Figur 10 perspektivisch und in der Figur 11 in Seitenansicht dargestellt. Dabei ist eine zu den Polkontakten 1.6, 1.7 der in dem Zellblock 2 angeordneten Einzelzellen 2 versetzte Position der Polkontakte 1.6, 1.7 der neuen Einzelzelle 1, insbesondere im Bereich der freien Enden der Polkontakte 1.6, 1.7, zu erkennen.

Die Figur 12 zeigt den Zellblock 2 mit der neuen Einzelzelle 1 im zusammengesetzten Zustand, wobei diese mittels des Schweißwerkzeugs 5 mit zwei Einzelzellen 1 verschweißt wird.

Die an der Oberseite 1.8 der neuen Einzelzelle 1 angeordneten Polkontakte 1.6, 1.7 sind dabei mit jeweils einem abgewinkelten, freien Ende in Hochausrichtung unterhalb des Überlappungsbereichs B der jeweils benachbarten Einzelzelle 1 angeordnet.

Die an der Unterseite 1.9 der neuen Einzelzelle 1 angeordneten Polkontakte 1.6, 1.7 sind mit jeweils einem abgewinkelten, freien Ende in Hochausrichtung oberhalb des Überlappungsbereichs B der jeweils benachbarten Einzelzelle 1 angeordnet. Mit anderen Worten: Die Polkontakte 1.6, 1.7 der neuen Einzelzelle 1 sind im zusammengesetzten Zustand des Zellblocks 1 um jeweils zwei Materialdicken eines Polkontakts 1.6, 1.7 zu den Polkontakten 1.6, 1.7 der benachbarten Einzelzelle 1 versetzt angeordnet.

Zur Verschweißung der neuen Einzelzelle 1 mit den benachbarten Einzelzellen 1 sind im vorliegenden Ausführungsbeispiel ein an der Unterseite 1.9 der neuen Einzelzelle 1 angeordneter zweiter Polkontakt 1.7 und ein an der Unterseite 1.9 der benachbarten Einzelzelle 1 angeordneter erster Polkontakt 1.6 zwischen der Sonotrode 5.1 und dem Amboss 5.2 angeordnet und werden durch die Sonotrode 5.1 stoffschlüssig miteinander verbunden, so dass ein neuer Überlappungsbereich B1 hergestellt wird. Dies wird bei allen weiteren Polkontakten 1.6, 1.7 der neuen Einzelzelle 1 fortgeführt. Der neue Überlappungsbereich B1 weist damit den Polkontakt 1.6, 1.7 der benachbarten Einzelzelle 1, den abgetrennten Abschnitt des Polkontakts 1.6, 1.7 der defekten Einzelzelle 1 und den Polkontakt 1.6, 1.7 der neuen Einzelzelle 1 auf.

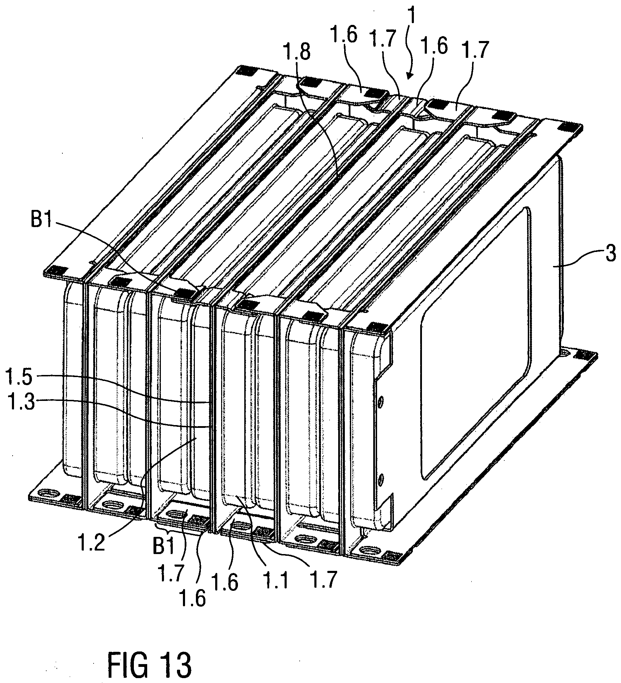

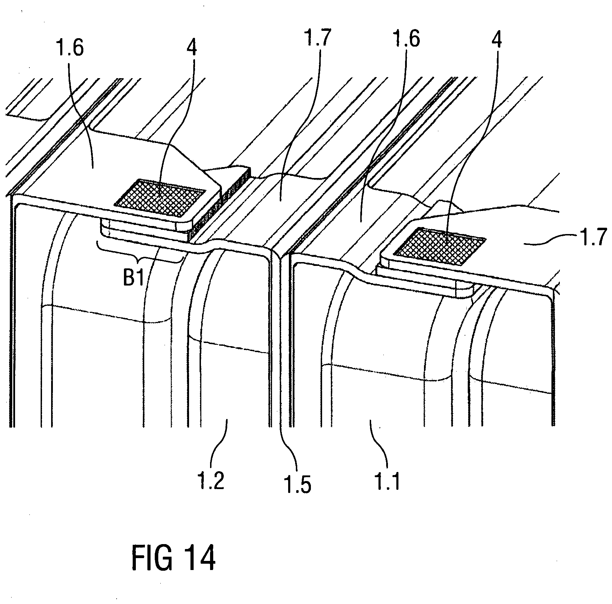

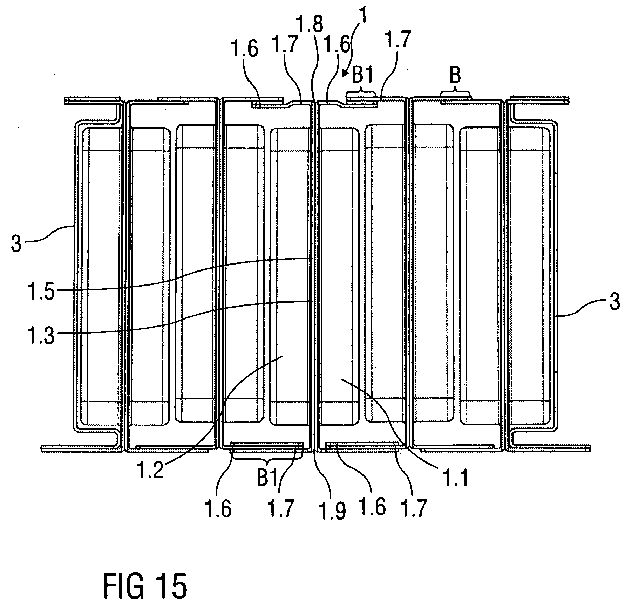

In den Figuren 13 bis 15 ist der Zellblock 2 mit der mit der neuen, verschweißten Einzelzelle 1 im zusammengesetzten Zustand. Dabei zeigt die Figur 13 den Zellblock 2 perspektivisch, die Figur 14 einen vergrößerten Ausschnitt aus dem in Figur 13 gezeigten Zellblock 2 und Figur 15 den Zellblock 2 gemäß Figur 13 in einer Seitenansicht.

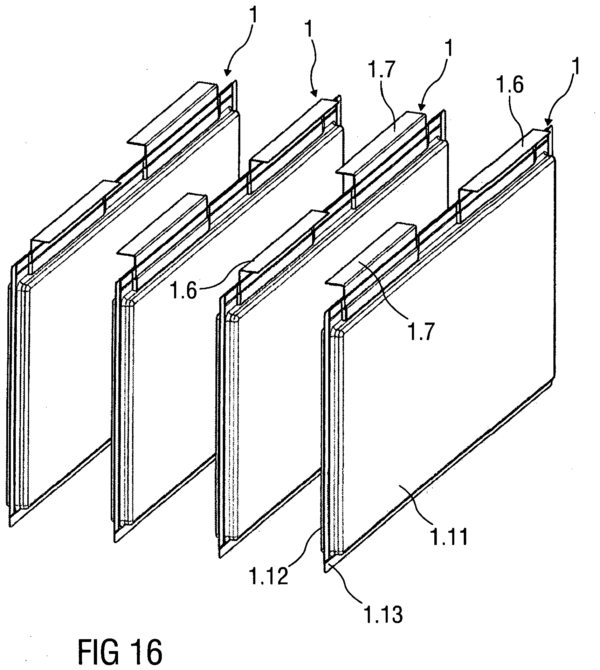

In den Figuren 16 bis 25 ist eine zweite Ausführungsform der Erfindung näher dargestellt und beschrieben, in welcher die Einzelzellen 1 als Pouchzellen ausgebildet sind.

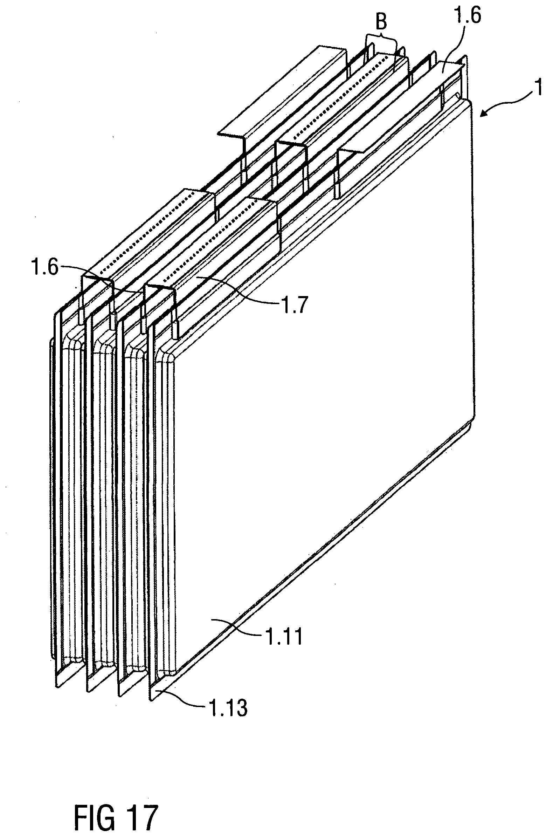

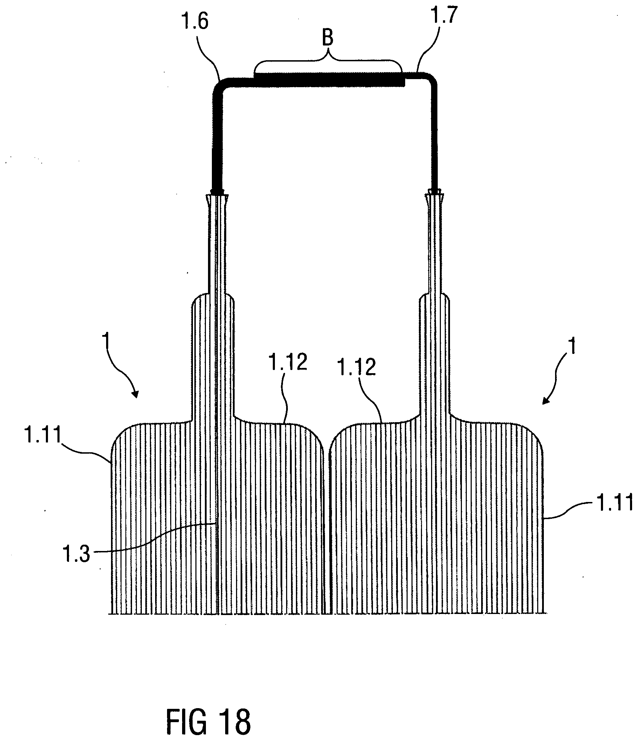

Die Einzelzellen 1 sind u. a. in den Figuren 16 bis 18 näher dargestellt, wobei die Figuren 16 und 17 diese perspektivisch und die Figur 18 zwei im Zellblock 2 benachbart angeordnete Einzelzellen 1 in einer Schnittdarstellung, insbesondere im Querschnitt, darstellen.

Bei als Pouchzellen ausgebildeten Einzelzellen 1 ist die Elektrodenfolienanordnung 1.3 von einer folienartigen Verpackung umgeben Die Verpackung ist aus zwei übereinander angeordneten Folienabschnitten 1.11, 1.12 gebildet, die im überlappenden Randbereich beispielsweise mittels eines Heißpressverfahrens stoffschlüssig miteinander verbunden werden, wobei eine Siegelnaht 1.13 gebildet wird.

An einer Seite der Einzelzelle 1 sind deren elektrische Polkontakte 1.6, 1.7 als Anschlüsse in Blechform aus der Verpackung herausgeführt.

Die elektrische Reihenschaltung der Einzelzellen 1 erfolgt durch direkte Verbindung, insbesondere mittels Laserschweißen, der Polkontakte 1.6, 1.7 benachbarter Einzelzellen 1, die aufeinander zu gebogen sind, wodurch ein Überlappungsbereich B gebildet ist, in welchem die Einzelzellen 1 durch Schweißnähte miteinander verschweißt sind, wie es in der Figur 17 mittels gepunkteter Linien dargestellt ist. Alternativ sind die Einzelzellen 1 mittels separater Zellverbinder 1.14 miteinander verbindbar, welche die Polkontakte 1.6, 1.7 benachbarter Einzelzellen 1 miteinander verbinden.

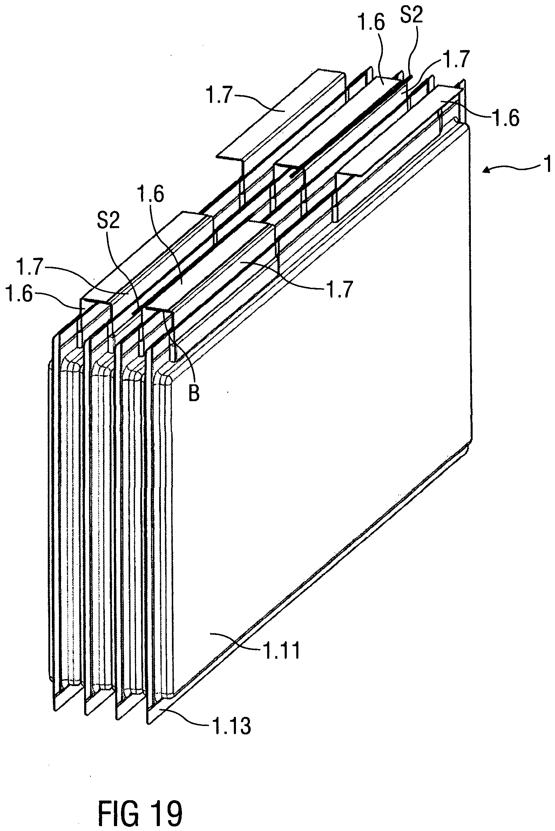

Zum Austausch einer defekten Einzelzelle 1 werden deren Polkontakte 1.6, 1.7 unmittelbar neben dem jeweiligen Überlappungsbereich B durchtrennt. Die Trennstellen sind in Figur 19 mittels zweiter Schnittlinien S2 dargestellt.

Das Heraustrennen der defekten Einzelzelle 1 kann äquivalent zu den als Rahmenflachzellen ausgebildeten Einzelzellen 1 mittels mechanischer Verfahren mit Werkzeugkontakt, wie z. B. Blechschneiden, Abschleifen, Abfräsen, Sägen, oder mittels berührungsloser Verfahren, wie z. B. Laserschneiden, Wasserstrahlschneiden, Mikro-Brennschneiden, erfolgen.

Auch hier ist es zusätzlich möglich, die Polkontakte 1.6, 1.7 der Einzelzellen 1 mit Sollbruchstellen, z. B. in Form einer Kerbe, zu versehen, um ein Heraustrennen der defekten Einzelzelle 1 zu erleichtern.

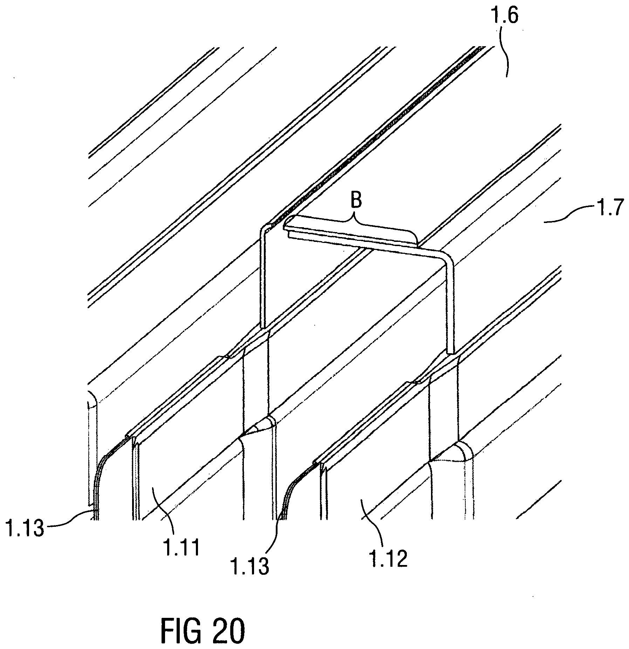

Die Figur 19 zeigt die nebeneinander angeordneten Einzelzellen 1 mit der defekten Einzelzelle 1, wobei deren Polkontakte 1.6, 1.7 an den zweiten Schnittlinien S2 mittels einer der oben beschriebenen Verfahren durchtrennt wurden. Dies ist in Figur 20, welche einen vergrößerten Ausschnitt aus der Figur 19 zeigt, näher dargestellt.

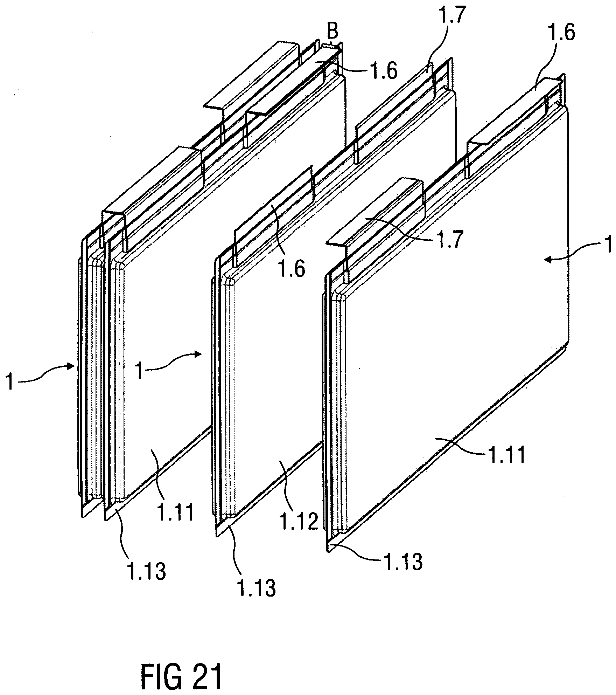

Die Figur 21 zeigt die nebeneinander angeordneten Einzelzellen 1 mit den durchtrennten Polkontakten 1.6, 1.7 der defekten Einzelzelle 1 in einer teilweisen Explosionsdarstellung.

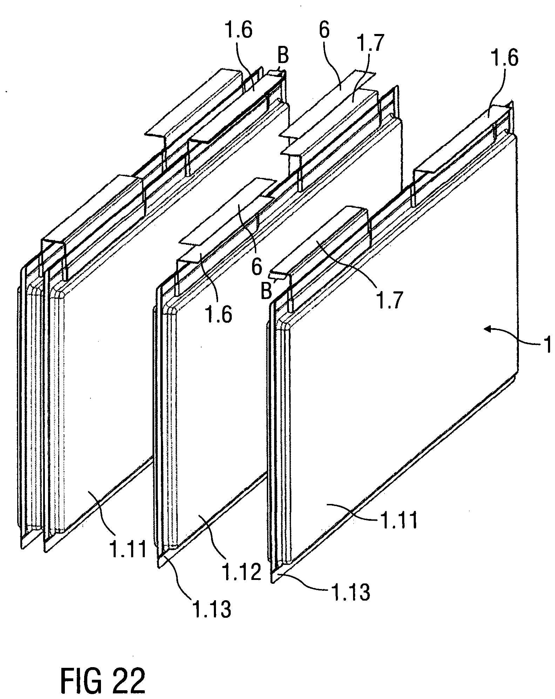

In der Figur 22 sind die nebeneinander angeordneten Einzelzellen 1 mit einer neu in den Zellblock 2 einzusetzenden Einzelzelle 1, welche die defekte, bereits demontierte, Einzelzelle 1 ersetzt, perspektivisch dargestellt.

Die Polkontakte 1.6, 1.7 der neuen Einzelzelle 1 sind gegenüber den Polkontakten 1.6, 1.7 der defekten Einzelzelle 1 sowie der in dem Zellblock 2 weiteren angeordneten, intakten Einzelzellen 1 verschieden ausgebildet, insbesondere ist ein Abstand zwischen dem abgewinkelten Abschnitt des jeweiligen Polkontakts 1.6, 1.7 und einer Zelloberkante, an welcher der Polkontakt 1.6, 1.7 über die Einzelzelle 1 hinausragt, geringer.

Damit können die abgewinkelten Abschnitte der Polkontakte 1.6, 1.7 der neuen Einzelzelle 1 in Bezug auf die Hochausrichtung der Einzelzelle 1 unterhalb des jeweiligen Überlappungsbereichs B der benachbarten Einzelzelle 1 angeordnet werden und damit einen neuen Überlappungsbereich B bilden. Der neue Überlappungsbereich B weist damit den Polkontakt 1.6, 1.7 der benachbarten Einzelzelle 1, den abgetrennten Abschnitt des Polkontakts 1.6, 1.7 der defekten Einzelzelle 1 und den Polkontakt 1.6, 1.7 der neuen Einzelzelle 1 auf.

Zur stoffschlüssigen Verbindung des neuen Überlappungsbereichs B wird vorzugsweise ein Kaltlötverfahren mit sogenannten Lötblechen 6, auch Lötpads genannt, angewendet.

Die Lötbleche 6 sind in ihrer Länge und Breite mit dem Überlappungsbereich B annähernd gleich ausgebildet und werden direkt auf den Überlappungsbereich B angeordnet.

Ein Lötblech 6 ist aus einem exotherm reaktiven Material als Wärmequelle und einer Lötfolie mit einem Weichlot, wie z. B. ein Zinnbasislot, Zinn, Zinn-Silber-Lot, Zinn-Silber-Kupfer-Lot, oder mit einem Hartlot, wie z. B. Incusil, gebildet. Dabei verbindet sich das Lötblech 6 nach einer externen Aktivierung, z. B. ein kurzer Stromimpuls oder eine partielle Erwärmung, durch eine exotherme Reaktion des Materials mit dem Überlappungsbereich B. Vorzugsweise kann als Stromimpuls elektrische Energie des Zellblocks 2 verwendet werden, wobei dieser nach Verpressung der Einzelzellen 1 und Anordnung der Lötbleche 6 auf den Überlappungsbereichen B an einen Widerstand angeschlossen wird, so dass ein bestimmter Strom fließt, welcher der zuvor beschriebenen Aktivierung der Lötbleche 6 dient.

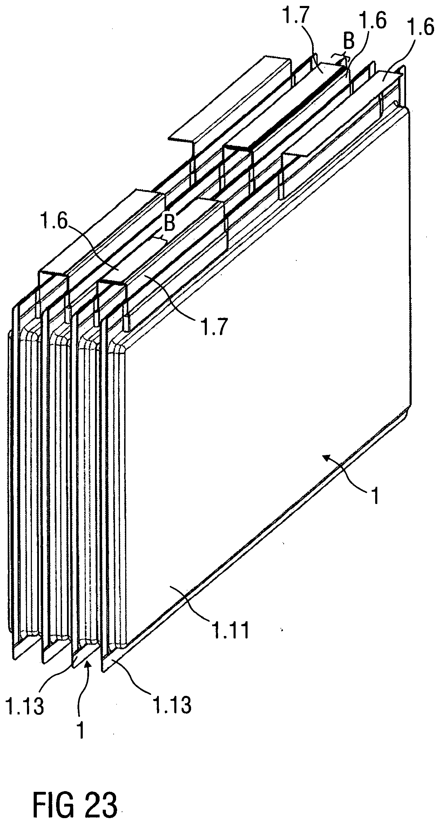

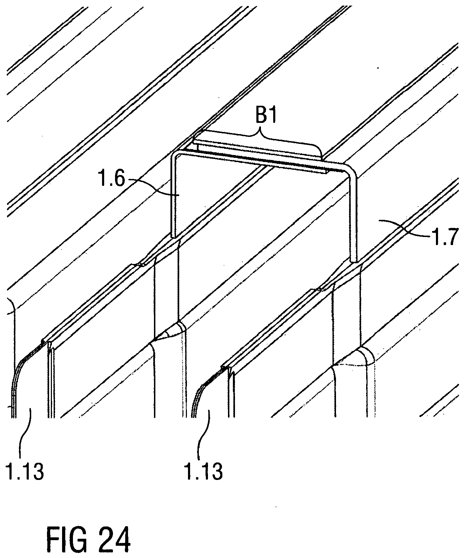

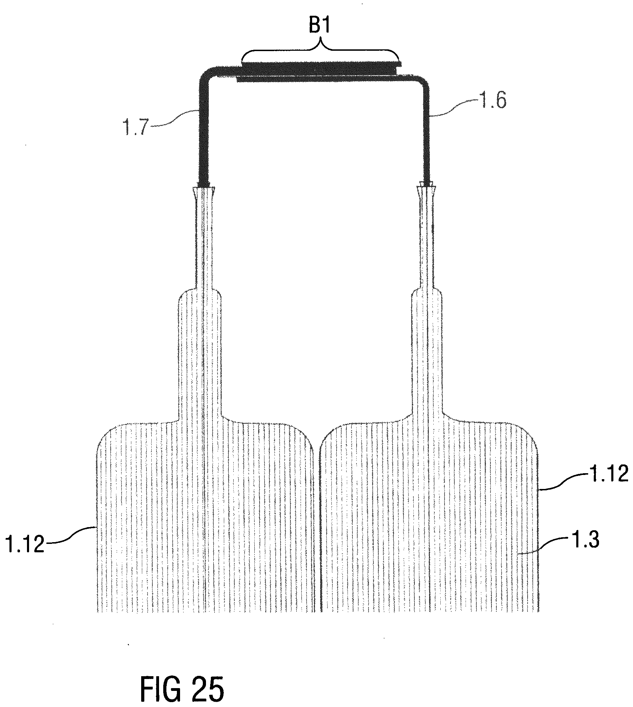

In den Figuren 23 bis 25 sind die nebeneinander angeordneten Einzelzellen 1 mit der neu eingesetzten Einzelzelle 1, welche die defekte, bereits demontierte, Einzelzelle 1 ersetzt, dargestellt. Dabei zeigt die Figur 23 die Einzelzellen 1 perspektivisch. Die Figur 24 zeigt einen vergrößerten Ausschnitt aus der Figur 23. In der Figur 25 ist ein vergrößerter Ausschnitt einer Einzelzelle 1 in Schnittdarstellung, insbesondere im Querschnitt, dargestellt, welche mit der neuen Einzelzelle 1 stoffschlüssig verbunden ist.

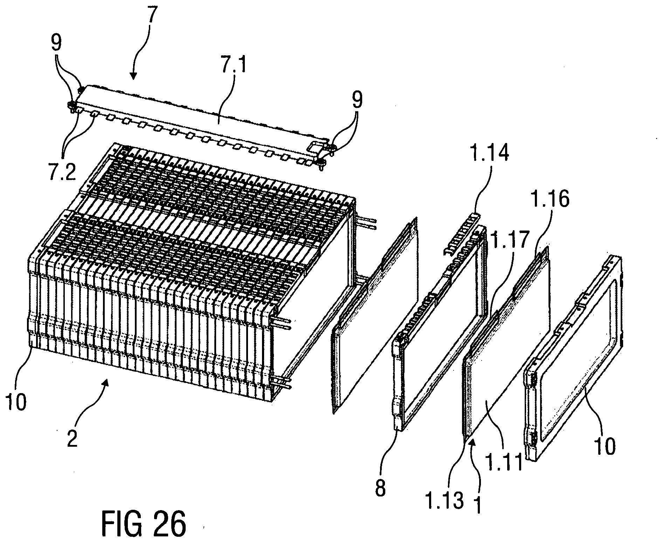

In den Figuren 26 bis 30 ist eine dritte Ausführung der Erfindung näher dargestellt, in welcher eine Batterieüberwachungseinheit 7 an einem Zellblock 2 mit in Rahmenelementen 8 gehaltenen, als Pouchzellen ausgebildeten Einzelzellen 1, ausgetauscht wird.

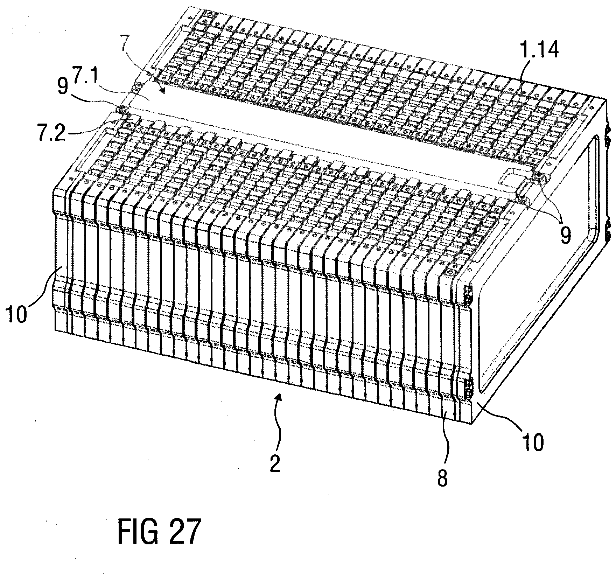

Dazu zeigt die Figur 26 perspektivisch einen Zellblock 2 mit einer Batterieüberwachungseinheit 7 in einer teilweisen Explosionsdarstellung. Die Figur 27 zeigt den Zellblock 2 im zusammengesetzten Zustand.

Die Batterieüberwachungseinheit 7 weist eine nicht näher dargestellte Elektronik auf, die in einem Batterieüberwachungsgehäuse 7.1 angeordnet ist, wobei die Batterieüberwachungseinheit 7 zur Zellspannungsmessung und zum Ladungsausgleich zwischen den Einzelzellen 1 des Zellblocks 2 dient. Dazu ist die Batterieüberwachungseinheit 7 unmittelbar oder mittelbar mit jeder Einzelzelle 1 des Zellblocks 2 gekoppelt.

Die Batterieüberwachungseinheit 7 wird in Bezug auf eine Oberseite des Zellblocks 2 in dessen Längsausdehnung mittig angeordnet und über Anschlusselemente 7.2 mit den Einzelzellen 1 verbunden. Hierzu weist die Batterieüberwachungseinheit 7 eine vorgebbare Anzahl von steg- oder zungenförmigen Anschlusselementen 7.2 auf, wobei an jeder Seite der Batterieüberwachungseinheit 7 eine Anzahl von Anschlusselementen 7.2 angeordnet oder ausgebildet ist und diese jeweils in Querausdehnung des Zellblocks 2 von dem Batterieüberwachungsgehäuse 7.1 abragen.

Ein Anschlusselement 7.2 der Batterieüberwachungseinheit 7 ist dabei zwei benachbarten Einzelzellen 1 zugeordnet, wobei das jeweilige Anschlusselement 7.2 abschnittsweise an einem Zellverbinder 1.14 stoffschlüssig befestigt ist, in dem ein Abschnitt des Anschlusselements 7.2 auf dem Zellverbinder 1.14 angeordnet wird, wodurch ein Überlappungsbereich B gebildet wird. Das Anschlusselement 7.2 wird mit dem Zellverbinder 1.14 anschließend im Überlappungsbereich B durch Punktschweißen oder Laserschweißen oder Löten verbunden. Zusätzlich ist die Batterieüberwachungseinheit 7 mittels Befestigungselementen 9 an den Zellblock 2 jeweils stirnseitig abschließenden Druckplatten 10 kraftschlüssig befestigbar.

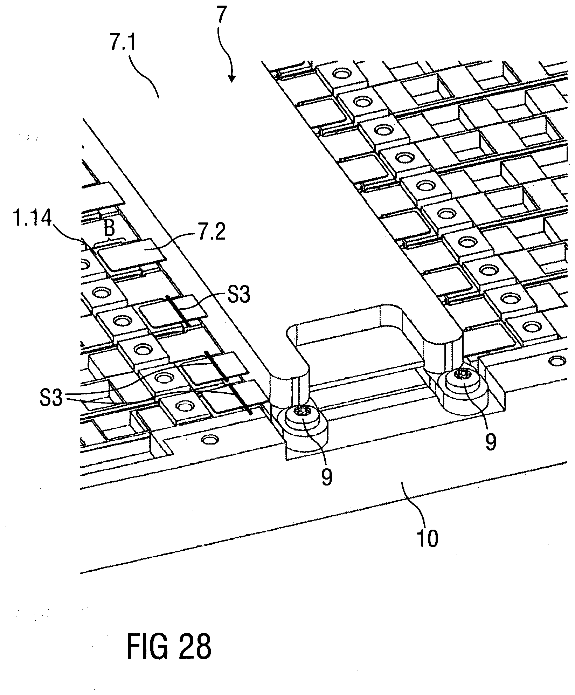

Zur Entnahme der Batterieüberwachungseinheit 7 werden die Anschlusselemente 7.2 jeweils unmittelbar neben dem Überlappungsbereich B mittels eines in der ersten oder zweiten Ausführung der Erfindung beschriebenen Verfahren durchtrennt, wie es in Figur 28 mittels dritter Schnittlinien S3 dargestellt ist. Die Figur 28 zeigt dabei einen vergrößerten Ausschnitt aus dem in Figur 27 perspektivisch dargstellten Zellblock 2, wobei die Batterieüberwachungseinheit 7 in einer Stirnseite näher dargestellt ist.

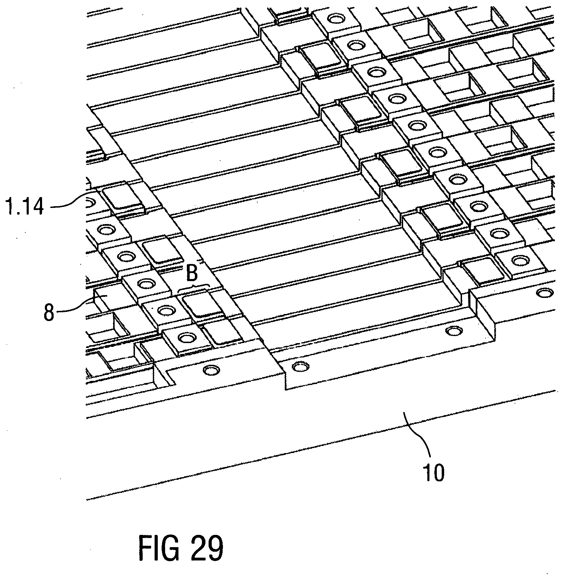

Die Figur 29 zeigt den vergrößerten Ausschnitt gemäß Figur 28 mit heraus getrennter Batterieüberwachungseinheit 7. Dabei ist insbesondere der Überlappungsbereich B zu erkennen, welcher nach dem Heraustrennen der Batterieüberwachungseinheit 7 an den Zellverbindern 1.14 verblieben ist.

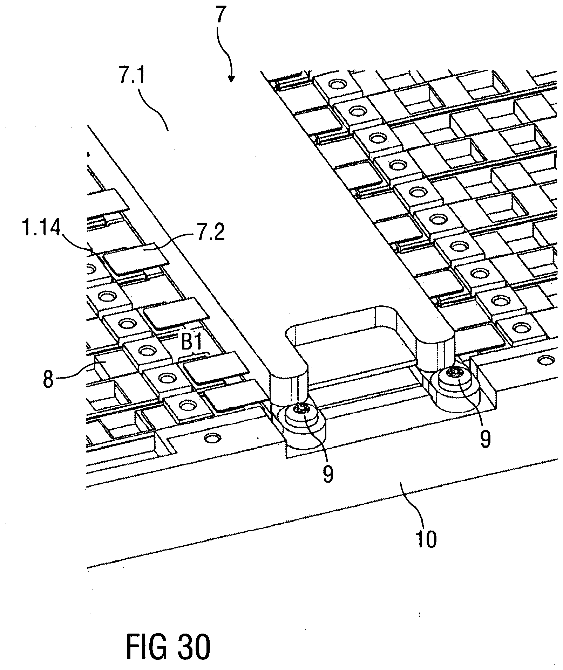

Wird eine neue oder reparierte Batterieüberwachungseinheit 7 nochmals an den Zellblock 2 angeordnet, wie es in der Figur 30 gezeigt ist, werden zur stoffschlüssigen Befestigung an den Zellverbindern 1.14 die Anschlusselemente 7.2 der Batterieüberwachungseinheit 7 diese abschnittsweise auf den Überlappungsbereich B angeordnet, so dass ein neuer Überlappungsbereich B1 gebildet wird, welcher einen Abschnitt des Zellverbinders 1.14, den abgetrennten Abschnitt des Anschlusselements 7.2 der demontierten Batterieüberwachungseinheit 7 sowie einen Abschnitt des Anschlusselements 7.2 der neuen Batterieüberwachungseinheit 7 aufweist. Dazu ist ein Abschnitt, insbesondere ein freies Ende des Anschlusselements 7.2 der neuen Batterieüberwachungseinheit 7, leicht abgewinkelt.

Die stoffschlüssige Verbindung ist mittels des in der zweiten Ausführung der Erfindung beschriebenen Kaltlötverfahrens realisierbar.

In Figur 30 ist eine mittels des Kaltlötverfahrens durchgeführte stoffschlüssige Befestigung der Anschlusselemente 7.2 der Batterieüberwachungseinheit 7 an den Zellverbindern 1.14 in einem vergrößerten Ausschnitt perspektivisch dargestellt.

### Bezugszeichenliste

- 1: Einzelzelle
- 1.1: erste Gehäuseschale
- 1.2: zweite Gehäuseschale
- 1.3: Elektrodenfolienanordnung
- 1.4: Rahmen
- 1.5: Siegelflansch
- 1.6: erster Polkontakt
- 1.7: zweiter Polkontakt
- 1.8: Oberseite
- 1.9: Unterseite
- 1.10: weiteres Teilstück
- 1.11: erster Folienabschnitt
- 1.12: zweiter Folienabschnitt
- 1.13: Siegelnaht
- 1.14: Zellverbinder
- 2: Zellblock
- 3: elektrisches Anschlusselement
- 4: Schweißpunkt
- 5: Schweißwerkzeug
- 5.1: Sonotronde
- 5.2: Amboss
- 6: Lötblech
- 7: Batterieüberwachungseinheit
- 7.1: Batterieüberwachungsgehäuse
- 7.2: Anschlusselemente
- 8: Rahmenelement
- 9: Befestigungselemente
- 10: Druckplatten

- B: Überlappungsbereich
- B1: neuer Überlappungsbereich
- S1: erste Schnittlinien
- S2: zweite Schnittlinien
- S3: dritte Schnittlinien

## Patentansprüche

1. Verfahren zur Wartung, Reparatur und/oder Optimierung einer Batterie, welche als Komponenten eine Anzahl von seriell und/oder parallel miteinander verschalteten Einzelzellen (1) mit elektrischen Polkontakten (1.6, 1.7), welche zur elektrischen Verschaltung direkt oder mittels Zellverbindern (1.14) unter Bildung eines Überlappungsbereichs (B) form- und/oder stoffschlüssig miteinander verbunden sind, und optional eine Batterieüberwachungseinheit (7) mit einer Anzahl von Anschlusselementen (7.2), welche mit den elektrischen Polkontakten (1.6, 1.7) und/oder mit den Zellverbindern (1.14) form- und/oder stoffschlüssig unter Bildung eines weiteren Überlappungsbereichs (B) verbunden sind, aufweist,
**dadurch gekennzeichnet, dass**
zum Austausch einer Komponente die form- und/oder stoffschlüssige Verbindung der auszutauschenden Komponente mit mindestens einer nicht auszutauschenden Komponente unmittelbar neben dem Überlappungsbereich (B) getrennt wird und eine Ersatzkomponente mittels deren elektrischer Polkontakte (1.6, 1.7) oder deren Anschlusselemente (7.2) mit den Überlappungsbereichen (B) der mindestens einen nicht auszutauschenden Komponente unter Bildung eines jeweils neuen Überlappungsbereichs (B1) form- und/oder stoffschlüssig verbunden wird.

2. Verfahren nach Anspruch 1,
**dadurch gekennzeichnet, dass**
die form- und/oder stoffschlüssige Verbindung der auszutauschenden Komponente mit der mindestens einen nicht auszutauschenden Komponente mittels Blechschneiden, Abschleifen, Abfräsen, Sägen, Laserschneiden, Wasserstrahlschneiden und/oder Mikro-Brennschneiden getrennt wird.

3. Verfahren nach Anspruch 1 oder 2,
**dadurch gekennzeichnet, dass**
als Ersatzkomponente eine Einzelzelle (1) mit mindestens einer nicht auszutauschenden Einzelzelle (1) stoff- und formschlüssig verbunden wird.

4. Verfahren nach Anspruch 3,
**dadurch gekennzeichnet, dass**
die elektrischen Polkontakte (1.6, 1.7) der Einzelzelle (1) derart abgewinkelt werden, dass diese jeweils oberhalb oder unterhalb des Überlappungsbereiches (B) der mindestens einen nicht auszutauschenden Einzelzelle (1) anordenbar sind.

5. Verfahren nach Anspruch 1 oder 2,
**dadurch gekennzeichnet, dass**
als Ersatzkomponente die Batterieüberwachungseinheit (7) mit den Einzelzellen (1) der Batterie stoff- und formschlüssig verbunden wird.

6. Verfahren nach Anspruch 5,
**dadurch gekennzeichnet, dass**
die Anschlusselemente (7.2) der Batterieüberwachungseinheit (7) derart abgewinkelt werden, dass diese jeweils oberhalb des Überlappungsbereiches (B) der Einzelzellen (1) anordenbar sind.

7. Verfahren nach einem der Ansprüche 1 bis 4,
**dadurch gekennzeichnet, dass**
die form- und/oder stoffschlüssige Verbindung der Ersatzkomponente mit der mindestens einen nicht auszutauschenden Komponente mittels Ultraschallschweißen hergestellt wird.

8. Verfahren nach Anspruch 5,
**dadurch gekennzeichnet, dass**
die form- und/oder stoffschlüssige Verbindung der Ersatzkomponente mit der mindestens einen nicht auszutauschenden Komponente durch Kaltlöten hergestellt wird.

9. Verfahren nach Anspruch 8,
**dadurch gekennzeichnet, dass** auf dem neuen Überlappungsbereich (B1) ein Lötblech (6) angeordnet wird.

10. Batterie, welche als Komponenten eine Anzahl von seriell und/oder parallel miteinander verschalteten Einzelzellen (1) mit elektrischen Polkontakten (1.6, 1.7), welche zur elektrischen Verschaltung direkt oder mittels Zellverbindern (1.14) unter Bildung eines Überlappungsbereichs (B) form- und/oder stoffschlüssig miteinander verbunden sind, und optional eine Batterieüberwachungseinheit (7) mit einer Anzahl von Anschlusselementen (7.2), welche mit den elektrischen Polkontakten (1.6, 1.7) und/oder mit den Zellverbindern (1.14) form- und/oder stoffschlüssig unter Bildung eines weiteren Überlappungsbereichs (B) verbunden sind, aufweist,
**dadurch gekennzeichnet, dass**
zumindest eine der Komponenten durch eine Ersatzkomponente ausgetauscht ist und die Ersatzkomponente derart abgewinkelte Polkontakte (1.6, 1.7) oder Anschlusselemente (7.2) aufweist, dass diese Polkontakte (1.6, 1.7) bzw. Anschlusselemente (7.2) jeweils oberhalb und/oder unterhalb des Überlappungsbereichs (B) mit diesem Überlappungsbereich (B) einer mit der Ersatzkomponente verbundenen nicht ausgetauschten Komponente verbunden sind, wobei ein neuer Überlappungsbereich (B1) gebildet ist.

## Claims

1. Method for the maintenance, repair and/or optimisation of a battery having as components a number of series- and/or parallel-interconnected individual cells (1) with electric pole contacts (1.6, 1.7), which are connected positively or by adhesive force to one another directly or by means of cell connectors (1.14) for electric interconnection while forming an overlapping region (B), and optionally a battery monitoring unit (7) with a number of connecting elements (7.2), which are connected positively or by adhesive force to the electric pole contacts (1.6, 1.7) and/or to the cell connectors (1.14) while forming a further overlapping region (B),,
**characterised in that**
for the replacement of a component, the positive and/or adhesive connection of the component to be replaced to at least one component not to be replaced is severed immediately adjacent to the overlapping region (B) and a replacement component is connected positively or by adhesive force to the overlapping regions (B) of the at least one component not to be replaced by means of its electric pole contacts (1.6, 1.7) or its connecting elements (7.2) while forming a new overlapping region (B1).

2. Method according to claim 1,
**characterised in that**
the positive and/or adhesive connection of the component to be replaced to the at least one component not to be replaced is severed by means of sheet metal cutting, grinding off, routing off, sawing, laser cutting, water jet cutting and/or flame cutting.

3. Method according to claim 1 or 2,
**characterised in that**
as a replacement component, an individual cell (1) is connected adhesively and positively to at least one individual cell (1) not to be replaced.

4. Method according to claim 3,
**characterised in that**
the electric pole contacts (1.6, 1.7) of the individual cell (1) are angled in such a way that they can in each case be placed above or below the overlapping region (B) of the at least one individual cell (1) not to be replaced.

5. Method according to claim 1 or 2,
**characterised in that**
as a replacement component, the battery monitoring unit (7) is connected adhesively and positively to the individual cells (1) of the battery.

6. Method according to claim 5,
**characterised in that**
the connecting elements (7.2) of the battery monitoring unit (7) are angled in such a way that they can in each case be placed above the overlapping region (B) of the individual cells (1).

7. Method according to any of claims 1 to 4,
**characterised in that**
the positive and/or adhesive connection of the of the replacement component to the at least one component not to be replaced is established by means of ultrasonic welding.

8. Method according to claim 5,
**characterised in that**
the positive and/or adhesive connection of the of the replacement component to the at least one component not to be replaced is established by cold soldering.

9. Method according to claim 8,
**characterised in that**
a solder sheet (6) is placed on the new overlapping region (B1).

10. Battery having as components a number of series- and/or parallel-interconnected individual cells (1) with electric pole contacts (1.6, 1.7), which are connected positively or by adhesive force to one another directly or by means of cell connectors (1.14) for electric interconnection while forming an overlapping region (B), and optionally a battery monitoring unit (7) with a number of connecting elements (7.2), which are connected positively or by adhesive force to the electric pole contacts (1.6, 1.7) and/or to the cell connectors (1.14) while forming a further overlapping region (B),
**characterised in that**
at least one of the components is replaced by a replacement component and the replacement component has pole contacts (1.6, 1.7) or connecting elements (7.2) which are angled in such a way that these pole contacts (1.6, 1.7) or connecting elements (7.2) are in each case connected above and/or below the overlapping region (B) to this overlapping region (B) of a component connected to the replacement component and not replaced, wherein a new overlapping region (B1) is formed.

## Revendications

1. Procédé d'entretien, de réparation et/ou d'optimisation d'une batterie, qui comporte en tant que composants un certain nombre de cellules individuelles (1) connectées les unes aux autres en série et/ou en parallèle au moyen de bornes électriques (1.6, 1.7) qui sont reliées les unes aux autres par complémentarité de forme ou par liaison de matière pour la connexion électrique directe ou à l'aide de pontets de connexion (1.14) formant ainsi une zone de chevauchement (B), et éventuellement une unité de surveillance de batterie (7) ayant un certain nombre d'éléments de branchement (7.2) qui sont reliés aux bornes électrique (1.6, 1.7) et/ou aux pontets de connexion (1.14) par complémentarité de forme et/ou par liaison de matière formant ainsi une autre zone de chevauchement (B), **caractérisé en ce que** pour remplacer un composant, la liaison par complémentarité de forme et/ou de matière du composant à remplacer avec au moins un composant à ne pas remplacer directement à proximité de la zone de chevauchement (B) est divisée et un composant de remplacement est relié par complémentarité de forme et/ou par liaison de matière au moyen de ses bornes électriques (1.6, 1.7) ou par ses éléments de branchement (7.2) aux zones de chevauchement (B) de l'au moins un composant à ne pas remplacer, formant ainsi respectivement une nouvelle zone de chevauchement (B1).

2. Procédé selon la revendication 1, **caractérisé en ce que** la liaison par complémentarité de forme et/ou de matière de l'élément à remplacer à l'au moins un composant à ne pas remplacer est divisée par découpage de tôle, par abrasion, par fraisage, par sciage, par découpe laser, par découpage par jet d'eau et/ou par micro-oxycoupage.

3. Procédé selon la revendication 1 ou la revendication 2, **caractérisé en ce qu'**en tant que composant de remplacement, une cellule individuelle (1) est reliée à au moins une cellule individuelle (1) à ne pas remplacer par complémentarité de forme et/ou par liaison de matière.

4. Procédé selon la revendication 3, **caractérisé en ce que** les bornes électriques (1.6, 1.7) de la cellule individuelle (1) sont pliées de manière à ce qu'elles puissent être disposées respectivement au-dessus et en-dessous de la zone de chevauchement (B) de l'au moins une cellule individuelle (1) à ne pas remplacer.

5. Procédé selon la revendication 1 ou la revendication 2, **caractérisé en ce qu'**en tant que composant de remplacement l'unité de surveillance de batterie (7) est reliée aux cellules individuelles (1) de la batterie par complémentarité de forme et par liaison de matière.

6. Procédé selon la revendication 5, **caractérisé en ce qu'**les éléments de branchement (7.2) de l'unité de surveillance de batterie (7) sont pliés de manière à ce qu'ils puissent être disposés respectivement au-dessus de la zone de chevauchement (B) des cellules individuelles (1).

7. Procédé selon l'une quelconque des revendications 1 à 4, **caractérisé en ce que** la liaison par complémentarité de forme et/ou de matière du composant de remplacement est fabriquée à l'aide de l'au moins un composant à ne pas remplacer par soudage par ultrasons.

8. Procédé selon la revendication 5, **caractérisé en ce que** la liaison par complémentarité de forme et/ou de matière du composant de remplacement est fabriquée à l'aide de l'au moins un composant à ne pas remplacer par brasage à froid.

9. Procédé selon la revendication 8, **caractérisé en ce que** sur la nouvelle zone de chevauchement (B1) est disposée une tôle de brasage (6).

10. Batterie qui comporte en tant que composants un certain nombre de cellules individuelles (1) connectées les unes aux autres en série et/ou en parallèle au moyen de bornes électriques (1.6, 1.7) qui sont reliées par complémentarité de forme et/ou par liaison de matière pour la connexion électrique directe ou au moyen de pontets de connexion (1.14) formant ainsi une zone de chevauchement (B), et éventuellement une unité de surveillance de batterie (7) comprenant un certain nombre d'éléments de branchement (7.2) qui sont reliés par complémentarité de forme et/ou par liaison de matière aux bornes électriques (1.6, 1.7) et/ou aux pontets de connexion (1.14) formant ainsi une autre zone de chevauchement (B), **caractérisé en ce qu'**au moins l'un des composants peut être remplacé par un composant de remplacement et le composant de remplacement comporte de telles bornes (1.6, 1.7) pliées ou des éléments de raccordement (7.2) que lesdites bornes (1.6, 1.7) ou lesdits éléments de raccordement (7.2) soient reliés respectivement au-dessus et/ou en dessous de la zone de chevauchement (B) à ladite zone de chevauchement (B) d'un composant non remplacé relié au composant de remplacement, formant ainsi une nouvelle zone de chevauchement (B1).
